# DEMANDE DE BREVET EUROPEEN

(11) **EP 4 679 773 A1**
(43) Date de publication de la demande: **14.01.2026**
(21) Numéro de dépôt: 25188933.3
(22) Date de dépôt: 11.07.2025
(51) Int. Cl.: H04L 9/40

(54) **DISPOSITIF ÉLECTRONIQUE DE TRAITEMENT, CALCULATEUR AVIONIQUE, INFRASTRUCTURE DE COMMUNICATION ET PROCÉDÉ DE TRAITEMENT ASSOCIÉS**

(30) Priorité: 11.07.2024 FR 2407601
(71) Demandeur: THALES, 92190 Meudon (FR)
(72) Inventeur: MONNIER, Stéphane, 33700 MERIGNAC (FR)
(74) Mandataire: Lavoix

(57) **Abrégé**

La présente invention concerne un dispositif électronique de traitement (44) destiné à être embarqué à bord d'un aéronef (30) et comprenant :
- un premier module de réception (50) configuré pour recevoir un message chiffré,
- un second module de réception (52) configuré pour recevoir un message déchiffré associé, le message déchiffré ayant été calculé via un algorithme de déchiffrement appliqué au message chiffré par un dispositif de déchiffrage (42), externe au dispositif de traitement (44), et
caractérisé en ce qu'il comprend en outre un module de vérification (54) configuré pour vérifier un comportement du dispositif de déchiffrage (42) via une comparaison entre le message chiffré et le message déchiffré associé selon un ensemble de critère(s) de comparaison.

## Description

La présente invention concerne un dispositif de traitement destiné à être embarqué à bord d'un aéronef.

L'invention concerne aussi un calculateur avionique destiné à être embarqué à bord d'un aéronef, le calculateur comprenant un dispositif de gestion de flux, un dispositif de déchiffrage et un tel dispositif de traitement.

L'invention concerne également une infrastructure de communication comprenant un calculateur sol destiné à être installé au sol et un tel calculateur avionique.

L'invention se rapporte également à un procédé de traitement mis en œuvre par un tel dispositif de traitement ; ainsi qu'un programme d'ordinateur comportant des instructions logicielles qui, lorsqu'elles sont exécutées par un ordinateur, mettent en œuvre un tel procédé de traitement.

L'invention concerne le domaine des communications dans le contexte des besoins de l'ATN/IPS (de l'anglais *Aeronautical Telecommunication Network using the Internet Protocol Suite*) désignant les réseaux de télécommunications aéronautiques basés sur le protocole de connexion Internet.

Dans le contexte de l'ATN/IPS, la sécurité informatique lors des communications est primordiale pour assurer la sureté des aéronefs en cas d'attaque informatique ou de défaillance des systèmes de télécommunication.

Plus précisément, l'invention concerne la sécurité informatique lors de communications entre un équipement sol et un équipement certifié embarqué à bord d'un aéronef.

Dans le monde des télécommunications aéronautiques, il est usuel de faire communiquer un aéronef avec un équipement au sol à l'aide d'un système avionique configuré pour permettre une telle communication. Généralement, les messages échangés lors de ces communications sont chiffrés, et le système avionique inclut alors un ou plusieurs algorithmes de déchiffrement/chiffrement pour déchiffrer des messages chiffrés reçus depuis l'équipement sol, voire pour chiffrer d'éventuels messages à destination de l'équipement sol.

De plus, un tel système avionique doit être certifié pour répondre aux besoins aéronautiques, par exemple selon la certification SAL (de l'anglais *Security Assurance Level*) ou encore selon la certification DAL (de l'anglais *Design Assurance Level*)*.*

Cependant, la liste d'algorithme(s) de déchiffrement nécessaire(s) pour déchiffrer des messages chiffrés reçus depuis des équipements sol est susceptible d'évoluer, et une nouvelle certification d'un tel système avionique est alors potentiellement nécessaire à chaque évolution de cette liste.

Le but de l'invention est alors de proposer un dispositif électronique de traitement et un procédé associé, permettant de remédier à ce problème.

A cet effet, l'invention a pour objet un dispositif de traitement destiné à être embarqué à bord d'un aéronef et comprenant :
- un premier module de réception configuré pour recevoir un message chiffré,
- un second module de réception configuré pour recevoir un message déchiffré associé, le message déchiffré ayant été calculé via un algorithme de déchiffrement appliqué au message chiffré par un dispositif de déchiffrage, externe au dispositif de traitement ;
le dispositif de traitement comprenant en outre un module de vérification configuré pour vérifier un comportement du dispositif de déchiffrage via une comparaison entre le message chiffré et le message déchiffré associé selon un ensemble de critère(s) de comparaison.

Le dispositif de traitement embarqué à bord de l'aéronef selon l'invention permet alors de vérifier le comportement du dispositif de déchiffrage, externe dispositif de traitement, qui a effectué le déchiffrement du message chiffré reçu, c'est-à-dire de vérifier l'intégrité du dispositif de déchiffrage via une surveillance régulière des messages déchiffrés, ceux-ci étant comparés à chaque message chiffré respectif.

Ainsi, le dispositif de traitement est certifié, mais le dispositif de déchiffrage n'est pas certifié, et un éventuel changement d'algorithme de déchiffrement ne nécessite alors pas de nouvelle certification.

De plus, le dispositif de traitement permet également via cette vérification d'intégrité de détecter rapidement une éventuelle attaque informatique, ou cyber-attaque, contre le dispositif de déchiffrage.

Suivant d'autres aspects avantageux de l'invention, le dispositif de traitement comprend une ou plusieurs des caractéristiques suivantes, prises isolément ou suivant toutes les combinaisons techniquement possibles :
- l'algorithme de déchiffrement est conforme au protocole Data Transport Layer Security (DTLS) ;
- l'ensemble de critère(s) de comparaison comporte un premier critère de comparaison dépendant d'une taille du message chiffré et d'une taille du message déchiffré ;
- l'ensemble de critère(s) de comparaison comporte un deuxième critère de comparaison dépendant d'un instant temporel de réception du message chiffré et d'un instant temporel de réception du message déchiffré ;
- le deuxième critère de comparaison est qu'un écart temporel entre l'instant temporel de réception du message chiffré et l'instant temporel de réception du message déchiffré est inférieur à une durée prédéfinie, telle que 100 ms ;
- le module de vérification est configuré pour comparer le message chiffré et le message déchiffré associé selon l'ensemble de critère(s) de comparaison, en l'absence d'une mise en œuvre de l'algorithme de déchiffrement au sein du dispositif de traitement.

L'invention concerne également un calculateur avionique destiné à être embarqué à bord d'un aéronef et comprenant :
- un dispositif de déchiffrage configuré pour recevoir un message chiffré et calculer un message déchiffré associé via un algorithme de déchiffrement,
- un dispositif de traitement configuré pour traiter le message déchiffré,
- un dispositif de gestion de flux configuré pour recevoir un flux de données et en extraire le message chiffré, puis pour transmettre le message chiffré à la fois au dispositif de traitement et au dispositif de déchiffrage, le dispositif de traitement étant tel que défini ci-dessus,

Suivant d'autres aspects avantageux de l'invention, le calculateur avionique comprend une ou plusieurs des caractéristiques suivantes, prises isolément ou suivant toutes les combinaisons techniquement possibles :
- le dispositif de traitement est configuré pour commander un redémarrage du dispositif de déchiffrage si l'ensemble de critère(s) de comparaison n'est pas respecté,
- le dispositif de traitement est configuré pour commander une mise en œuvre d'un nouveau dispositif de déchiffrage si l'ensemble de critère(s) de comparaison n'est pas respecté à nouveau suite au redémarrage du dispositif de déchiffrage,
- le dispositif de traitement est configuré pour recevoir, lors d'un premier échange, une donnée de vérification depuis un calculateur sol à travers un canal de communication sécurisée et vérifier l'établissement d'un tel premier échange via un automate d'état.

De plus, l'invention concerne une infrastructure de communication comprenant :
- un calculateur avionique destiné à être embarqué à bord d'un aéronef et configuré pour recevoir et traiter un flux de données,
- un calculateur sol destiné à être installé au sol et configuré pour générer et transmettre le flux de données au calculateur avionique, et
le calculateur avionique étant tel que défini ci-dessus.

De plus, l'invention concerne un procédé de traitement mis en œuvre par un dispositif électronique de traitement et comprenant les étapes suivantes :
- réception d'un message chiffré,
- réception d'un message déchiffré associé, le message déchiffré ayant été calculé via un algorithme de déchiffrement appliqué au message chiffré par un dispositif de déchiffrage, externe au dispositif de traitement, et
- vérification d'un comportement du dispositif de déchiffrage via une comparaison entre le message chiffré et le message déchiffré associé selon un ensemble de critère(s) de comparaison.

Suivant d'autres aspects avantageux de l'invention, le procédé de traitement comprend l'étape suivante :
- avant l'étape de réception, un échange initial de données non-chiffré et comprenant :
   - génération d'une clé client privée et une clé client publique par un calculateur sol,
   - génération d'une clé serveur privée et une clé serveur publique par le dispositif de déchiffrage,
   - émission d'un message de reconnaissance, depuis le calculateur sol, en direction du dispositif de déchiffrage via un canal de communication sécurisé entre le calculateur sol et le dispositif de déchiffrage, ledit message de reconnaissance incluant au moins une donnée de signature client aléatoire, une liste d'algorithmes de chiffrement pris en charge, la clé client publique et une liste de services de cryptographie supportés,
   - réception du message de reconnaissance par le dispositif de déchiffrage,
   - sélection d'un algorithme de chiffrement et d'un service de cryptographie parmi les listes reçues,
   - émission d'un second message de reconnaissance, depuis le dispositif de déchiffrage, en direction du calculateur sol via le canal de communication, ledit second message de reconnaissance incluant au moins l'algorithme de chiffrement sélectionné, la clé serveur publique et le service de cryptographie sélectionné,
   - calcul d'une première donnée de vérification par le dispositif de déchiffrage à partir de la clé client publique et de la clé serveur privée,
   - calcul d'une seconde donnée de vérification par le calculateur sol à partir de la clé serveur publique et de la clé client privée,
- établissement d'une communication chiffrée entre le calculateur sol et le calculateur avionique, ladite communication étant autorisée uniquement si la première donnée de vérification est égale à la seconde donnée de vérification.

Enfin, l'invention concerne également un programme d'ordinateur comportant des instructions logicielles qui, lorsqu'elles sont exécutées par un ordinateur, mettent en œuvre un procédé de traitement tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'une infrastructure de communication, selon l'invention, l'infrastructure de communication comprenant un calculateur sol destiné à être installé au sol et un calculateur avionique destiné à être embarqué à bord d'un aéronef, le calculateur avionique comprenant un dispositif de gestion de flux, un dispositif de déchiffrage et un dispositif de traitement selon l'invention ; et
[Fig. 2] la figure 2 est un organigramme d'un procédé de traitement selon l'invention, le procédé étant mis en œuvre par le dispositif de traitement de la figure 1.

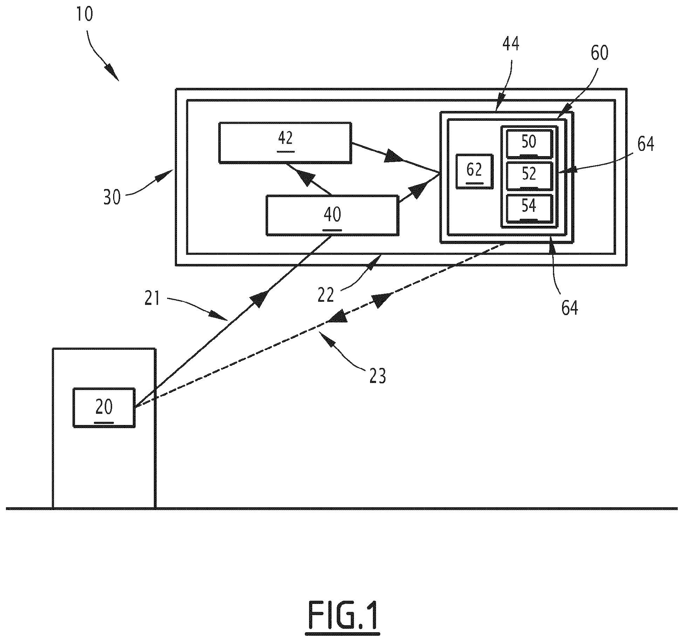

Sur la figure 1, une infrastructure de communication 10 comprend un calculateur sol 20 destiné à être installé au sol et un calculateur avionique 22 destiné à être embarqué à bord d'un aéronef 30.

Par exemple, le calculateur sol 20 est configuré pour générer et transmettre un flux de données 21 au calculateur avionique 22 via une liaison de données. Le flux de données 21 comprend au moins un message chiffré. Typiquement, le flux de données 21 comprend, en outre, des adresses MAC, IP, UDP, une source et une destination. La liaison de données est connue en soi, et est typiquement une liaison radioélectrique.

Le calculateur avionique 22 est configuré pour recevoir et traiter ledit flux de données 21.

Le calculateur avionique 22 comprend un dispositif électronique de gestion de flux 40, un dispositif électronique de déchiffrage 42 et un dispositif électronique de traitement 44.

Typiquement, le dispositif de gestion de flux 40, le dispositif de déchiffrage 42 et le dispositif de traitement 44 sont connectés les uns aux autres.

Par exemple le dispositif de gestion de flux 40, le dispositif de déchiffrage 42 et le dispositif de traitement 44 s'exécutent sur un même processeur.

En variante, seul le dispositif de déchiffrage 42 et le dispositif de traitement 44 s'exécutent sur le même processeur.

En variante encore, le dispositif de gestion de flux 40, le dispositif de déchiffrage 42 et le dispositif de traitement 44 s'exécutent chacun sur un processeur distinct respectif. Selon cette variante, le dispositif de gestion de flux 40, le dispositif de déchiffrage 42 et le dispositif de traitement 44 s'exécutent alors au global sur trois processeurs distincts.

Le dispositif de gestion de flux 40 est configuré pour recevoir le flux de données 21. En complément, le dispositif de gestion de flux 40 est configuré pour ne traiter que les flux de données légitimes. Par exemple, les flux de données légitimes contiennent des adresses MAC, IP, UDP, une source et une destination cohérentes.

De plus, le dispositif de gestion de flux 40 est configuré pour extraire le message chiffré du flux de données 21.

Le dispositif de déchiffrage 42, également appelé dispositif de déchiffrement, est configuré pour recevoir le message chiffré et calculer un message déchiffré associé via un algorithme de déchiffrement.

Avantageusement, le dispositif de déchiffrage 42 ne nécessite aucune certification avionique.

A titre d'exemple, l'algorithme de déchiffrement est conforme à un protocole de communication, tel que le protocole DTLS (de l'anglais *Data Transport Layer Security*)*.*

En variante, le protocole de communication auquel l'algorithme de déchiffrement est conforme est choisi parmi le groupe consistant en : le protocole TCP (de l'anglais *Transport Control Protocol*)*,* le protocole IPv6, le protocole Packet Firewall, le protocole ICMP (de l'anglais *Internet Control Message Protocol*)*,* et le protocole TLS (de l'anglais *Transport Layer Security*)*.*

L'algorithme de déchiffrement est par exemple choisi parmi le groupe consistant en : un algorithme SHA (de l'anglais Secure Hash Algorithm), un algorithme AES (de l'anglais Advanced Encryption Standard), un algorithme CCM (de l'anglais Counter mode with Cipher block chaining Message) et un algorithme GCM (de l'anglais Galois Counter Mode)

Lorsque l'algorithme de déchiffrement est de type SHA, il utilise par exemple un service de cryptographie choisi parmi le groupe de services de cryptographie comportant : TLS_AES_128_GCM_SHA256, TLS_AES_128_CCM_SHA256, TLS_AES_256_GCM_SHA384.

En complément facultatif, l'algorithme de déchiffrement est codé en linux, et le dispositif de déchiffrage 42 est configuré pour embarquer seulement une liste prédéfinie de bibliothèques nécessaires au fonctionnement dudit algorithme de déchiffrement.

Le dispositif de traitement 44 comprend un premier module de réception 50, un second module de réception 52 et un module de vérification 54.

Contrairement au dispositif de déchiffrage 42, le dispositif de traitement 44 est avantageusement certifié, par exemple selon la certification SAL ou encore selon la certification DAL.

Dans l'exemple de la figure 1, le dispositif de traitement 44 comprend une unité de traitement d'informations 60 formée, par exemple, d'un processeur 62 et d'une mémoire 64 associée au processeur 62.

Toujours dans l'exemple de la figure 1, le premier module de réception 50, le second module de réception 52 et le module de vérification 54 sont réalisés chacun sous forme d'un logiciel, ou d'une brique logicielle, exécutable par le processeur 62. La mémoire 64 du dispositif traitement 44 est alors apte à stocker un premier logiciel de réception, un second logiciel de réception et un logiciel de vérification. Le processeur 62 est alors apte à exécuter chacun des logiciels parmi le premier logiciel de réception, le second logiciel de réception et le logiciel de vérification.

En variante non représentée, le premier module de réception 50, le second module de réception 52 et le module de vérification 54 sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit).*

Lorsque le dispositif de traitement 44 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Par exemple, le dispositif de traitement 44 est dans un IMA (de l'anglais Integrated Module Avionics). Un IMA est un système avionique de réseau informatique comportant une pluralité de modules informatiques capables de prendre en charge de nombreuses applications de différents niveaux de criticité.

Le premier module de réception 50 est configuré pour recevoir le message chiffré de la part du dispositif de gestion de flux 40.

Le second module de réception 52 est configuré pour recevoir le message déchiffré en provenance du dispositif de déchiffrage 42.

Le module de vérification 54 est configuré pour vérifier un comportement du dispositif de déchiffrage 42 via une comparaison entre le message chiffré et le message déchiffré associé selon un ensemble de critère(s) de comparaison.

L'ensemble de critère(s) de comparaison comporte un premier critère de comparaison dépendant d'une taille du message chiffré et d'une taille du message déchiffré.

Par exemple, si la taille du message chiffré est égale à la taille du message déchiffré, le dispositif de traitement 44 valide le comportement du dispositif de déchiffrage 42 comme normal, et le dispositif de déchiffrage 42 est considéré conforme, i.e. intègre. Au contraire, si la taille du message chiffré est différente de la taille du message déchiffré, le dispositif de traitement 44 ne valide pas le comportement du dispositif de déchiffrage 42, et le dispositif de déchiffrage 42 est considéré non-conforme, i.e. non-intègre. En effet, un écart de taille entre le message chiffré et le message déchiffré peut signifier que le dispositif de déchiffrage 42 est défectueux ou victime d'une attaque informatique.

En complément, l'ensemble de critère(s) de comparaison comporte un deuxième critère de comparaison dépendant de l'instant temporel de réception du message chiffré et de l'instant temporel de réception du message déchiffré par le dispositif de traitement 44.

Par exemple, si le dispositif de déchiffrage 42 est défectueux ou victime d'une attaque informatique, le traitement des messages est typiquement ralenti causant un écart temporel accru entre les instants de réception par le dispositif de traitement 44 du message chiffré et du message déchiffré.

Par exemple, le deuxième critère de comparaison est qu'un écart temporel entre l'instant temporel de réception du message chiffré et l'instant temporel de réception du message déchiffré est inférieur à une durée prédéfinie, telle que 100 ms. Une telle valeur d'écart temporel est légèrement supérieure au temps de calcul normal du dispositif de déchiffrage 42.

Avantageusement, le module de vérification 54 est configuré pour comparer le message chiffré et le message déchiffré associé selon l'ensemble de critère(s) de comparaison, en l'absence d'une mise en œuvre de l'algorithme de déchiffrement au sein du dispositif de traitement 44.

En complément facultatif, le dispositif de traitement 44 est configuré pour commander un redémarrage du dispositif de déchiffrage 42 si l'ensemble de critère(s) de comparaison n'est pas respecté. L'homme du métier reconnaitra que la capacité du dispositif de traitement 44 à redémarrer un tel dispositif de déchiffrage 42 sans impacter les autres partitions d'un même système est une propriété des OS (de l'anglais *Operating System*) des IMA.

En complément, le dispositif de traitement 44 est configuré pour commander une mise en œuvre d'un nouveau dispositif de déchiffrage 42 si l'ensemble de critère(s) de comparaison n'est pas respecté à nouveau suite au redémarrage du dispositif de déchiffrage 42.

En complément, le dispositif de traitement 44 est configuré pour vérifier l'intégrité d'un premier échange de données entre le dispositif de déchiffrage 42 et le calculateur sol 20 via un automate d'état, ledit premier échange de données étant effectué au travers d'un canal de communication sécurisé 23.

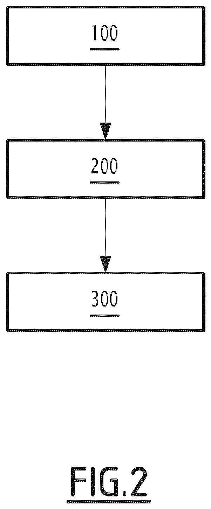

Le fonctionnement du calculateur avionique 22 selon invention, et en particulier du dispositif électronique de traitement 44, est désormais expliqué à l'aide de la figure 2 représentant un organigramme du procédé de traitement selon l'invention.

Dans un premier temps, le premier échange de données n'est pas chiffré et se divise en une pluralité d'actions successives.

Lors d'une première action de génération, le calculateur sol 20 génère une clé client privée et une clé client publique. En parallèle, le dispositif de déchiffrage 42 génère une clé serveur privée et une clé serveur publique. Typiquement, les clés privées générées sont codées sur 32 octets et ont donc des valeurs comprises entre 0 et 2²⁵⁶-1. Avantageusement, de telles tailles de clés permettent d'améliorer la sécurité en cas de cyber-attaque, telle qu'une attaque par force brute.

Lors d'une seconde action de reconnaissance, le calculateur sol 20 émet un message de reconnaissance en direction du dispositif de déchiffrage 42 via le canal de communication sécurisé 23. Le message de reconnaissance comprend au moins une donnée de signature client aléatoire, une liste d'algorithmes de chiffrement pris en charge, la clé client publique et une liste de services de cryptographie supportés. En complément facultatif, la liste d'algorithmes de chiffrement et la liste de services de cryptographie sont rangées selon un ordre de préférence.

Lorsque le dispositif de déchiffrage 42 réceptionne ledit message de reconnaissance, ledit dispositif de déchiffrage 42 émet en retour un second message de reconnaissance en direction du calculateur sol 20 via le canal de communication sécurisé 23. Le second message de reconnaissance comprend au moins un algorithme de chiffrement sélectionné parmi la liste reçue du calculateur sol 20, la clé serveur publique et un service de cryptographie sélectionné parmi la liste reçue du calculateur sol 20. Si les listes reçues sont rangées par ordre de préférence, le dispositif de déchiffrage 42 sélectionne le premier algorithme de chiffrement et le premier service de cryptographie que ce dernier est capable de prendre charge dans lesdites listes.

Ensuite, le dispositif de déchiffrage 42 calcule une première donnée de vérification à partir de la clé client publique et de la clé serveur privée. Par exemple, la donnée de vérification est le résultat de l'application de l'algorithme curve25519() sur la clé client publique et la clé serveur privée.

En parallèle, le calculateur sol 20 calcule une seconde donnée de vérification par application de l'algorithme curve25519() sur la clé serveur publique et la clé client privée. Avantageusement, les calculs effectués par le calculateur 20 et le dispositif de déchiffrage 42 ont le même résultat grâce aux propriétés de la multiplication de courbes elliptiques de l'algorithme curve25519().

La première donnée de vérification transmise par le dispositif de déchiffrage 42, et respectivement la deuxième donnée de vérification transmise par le calculateur sol 20, lors de tels échanges, permettent de vérifier que la communication de données est autorisée entre les deux appareils.

Lors de tels échanges, une communication reçue par le dispositif de déchiffrage 42, ou respectivement par le calculateur sol 20, ne comportant pas la donnée de vérification correspondante est interrompue.

En outre, pour autoriser la réception de messages chiffrés de la part du calculateur sol 20, le dispositif de déchiffrage 42 vérifie préalablement que la première donnée de vérification calculée est égale à la seconde donnée de vérification reçue ; et réciproquement pour autoriser la réception de messages chiffrés de la part du dispositif de déchiffrage 42, le calculateur sol 20 vérifie préalablement que la seconde donnée de vérification calculée est égale à la première donnée de vérification reçue.

Une fois ces actions effectuées, les communications entre le calculateur sol 20 et le calculateur avionique 22 sont chiffrées. L'algorithme de chiffrement et le service de cryptographie utilisés lors desdites communications étant connus du calculateur sol 20 et du dispositif de déchiffrage 42, chacun des calculateurs est capable de lire des données chiffrées reçues par l'autre calculateur ou de transmettre des données chiffrées à l'autre calculateur.

A chaque communication, le calculateur sol 20 et le dispositif de déchiffrage fournissent la donnée de vérification correspondante sans laquelle ladite communication est interrompue.

De plus, l'automate d'état vérifie l'intégrité de la donnée de signature client aléatoire et si l'une des actions précédentes n'est pas convenablement mise en œuvre. Si ladite intégrité n'est pas vérifiée, le calculateur avionique 22 refuse toute communication.

Lors d'une étape 100, le dispositif électronique de traitement 44 reçoit, via son premier module de réception 50, un message chiffré respectif de la part du dispositif de gestion de flux 40.

Avantageusement, le dispositif électronique de traitement 44 reçoit le message chiffré une fois que le premier échange a été établi et que la donnée de vérification a été validée.

Après cette première étape de réception 100, le dispositif de traitement 44 reçoit, lors d'une étape suivante 200 et via son second module de réception 52, un message déchiffré respectif de la part du dispositif de déchiffrage 42.

L'homme du métier comprendra que le temps de calcul, i.e. de mise en œuvre, du dispositif de déchiffrage 42 implique un écart temporel entre l'instant temporel de réception du message chiffré et l'instant temporel de réception du message déchiffré par le dispositif de traitement 44, c'est-à-dire entre l'instant temporel associé à la première étape de réception 100 et l'instant temporel associé à la deuxième étape de réception 200.

Par exemple, le message déchiffré correspond à la partie utile de données extraites du flux de données 21.

Le message déchiffré est calculé à partir du message chiffré via l'application de l'algorithme de déchiffrement au message chiffré.

L'algorithme de déchiffrement est appliqué par le dispositif de déchiffrage 42, externe au dispositif de traitement 44. Par exemple, l'algorithme de déchiffrement est appliqué par le dispositif de déchiffrage 42 du calculateur avionique 22.

Ensuite, le dispositif de traitement 44 vérifie, lors d'une étape suivante 300 et via son module de vérification 54, le comportement du dispositif de déchiffrage 42.

Cette vérification du comportement vise alors à vérifier l'intégrité du dispositif de déchiffrage 42, et en particulier qu'il n'a pas fait l'objet d'une attaque.

La vérification est mise en œuvre via une comparaison entre le message chiffré et le message déchiffré associé selon l'ensemble de critère(s) de comparaison.

Avantageusement, si l'ensemble de critère(s) de comparaison n'est pas respecté, le dispositif de traitement 44 commande le redémarrage du dispositif de déchiffrage 42.

En complément facultatif, si l'ensemble de critère(s) de comparaison n'est pas respecté à nouveau suite au redémarrage du dispositif de déchiffrage 42, le dispositif de traitement 44 commande la mise en œuvre d'un nouveau dispositif de déchiffrage 42.

On conçoit alors que le dispositif électronique de traitement 44 selon l'invention permet de vérifier l'intégrité et la disponibilité du dispositif de déchiffrage 42 qui est externe au dispositif de traitement 44 et alors distinct du dispositif de traitement 44. Le dispositif de déchiffrage 42 est par exemple en forme d'un logiciel COTS embarqué à bord de l'aéronef 30.

Particulièrement, une telle invention permet de surveiller en temps réel l'intégrité du dispositif de déchiffrage 42 exécutant un logiciel COTS dans le contexte spécifique de l'ATN/IPS.

De plus, l'invention permet de détecter rapidement une éventuelle attaque informatique, ou cyber-attaque, contre le dispositif de déchiffrage 42.

Enfin, les capacités du dispositif de traitement 44 à redémarrer le dispositif de déchiffrage 42 et à mettre en œuvre un nouveau dispositif de déchiffrage en cas de problème détecté permettent de garantir la disponibilité du dispositif de déchiffrage 42, par exemple sous forme de logiciel COTS, dans le contexte de l'ATN/IPS.

## Revendications

1. Dispositif électronique de traitement (44) destiné à être embarqué à bord d'un aéronef (30) et comprenant :
- un premier module de réception (50) configuré pour recevoir un message chiffré,
- un second module de réception (52) configuré pour recevoir un message déchiffré associé, le message déchiffré ayant été calculé via un algorithme de déchiffrement appliqué au message chiffré par un dispositif de déchiffrage (42), externe au dispositif de traitement (44), et
**caractérisé en ce qu'**il comprend en outre un module de vérification (54) configuré pour vérifier un comportement du dispositif de déchiffrage (42) via une comparaison entre le message chiffré et le message déchiffré associé selon un ensemble de critère(s) de comparaison.

2. Dispositif de traitement (44) selon la revendication 1, dans lequel l'algorithme de déchiffrement est conforme au protocole Data Transport Layer Security (DTLS).

3. Dispositif de traitement (44) selon l'une quelconque des revendications précédentes, dans lequel l'ensemble de critère(s) de comparaison comporte un premier critère de comparaison dépendant d'une taille du message chiffré et d'une taille du message déchiffré.

4. Dispositif de traitement (44) selon l'une quelconque des revendications précédentes, dans lequel l'ensemble de critère(s) de comparaison comporte un deuxième critère de comparaison dépendant d'un instant temporel de réception du message chiffré et d'un instant temporel de réception du message déchiffré.

5. Dispositif de traitement (44) selon la revendication 4, dans lequel le deuxième critère de comparaison est qu'un écart temporel entre l'instant temporel de réception du message chiffré et l'instant temporel de réception du message déchiffré est inférieur à une durée prédéfinie.

6. Dispositif de traitement (44) selon l'une quelconques des revendications précédentes, dans lequel le module de vérification (54) est configuré pour comparer le message chiffré et le message déchiffré associé selon l'ensemble de critère(s) de comparaison, en l'absence d'une mise en œuvre de l'algorithme de déchiffrement au sein du dispositif de traitement (44).

7. Calculateur avionique (22) destiné à être embarqué à bord d'un aéronef (30) et comprenant :
- un dispositif de déchiffrage (42) configuré pour recevoir un message chiffré et calculer un message déchiffré associé via un algorithme de déchiffrement,
- un dispositif de traitement (44) configuré pour traiter le message déchiffré,
- un dispositif de gestion de flux (40) configuré pour recevoir un flux de données (21) et en extraire le message chiffré, puis pour transmettre le message chiffré à la fois au dispositif de traitement (44) et au dispositif de déchiffrage (42), et
**caractérisé en ce que** le dispositif de traitement (44) est selon l'une quelconque des revendications précédentes.

8. Calculateur avionique (22) selon la revendication précédente, dans lequel le dispositif de traitement (44) est configuré pour commander un redémarrage du dispositif de déchiffrage (42) si l'ensemble de critère(s) de comparaison n'est pas respecté.

9. Calculateur avionique (22) selon la revendication 8, dans lequel le dispositif de traitement (44) est configuré pour commander une mise en œuvre d'un nouveau dispositif de déchiffrage (42) si l'ensemble de critère(s) de comparaison n'est pas respecté à nouveau suite au redémarrage du dispositif de déchiffrage (42).

10. Calculateur avionique (22) selon l'une quelconque des revendications 7 à 9, dans lequel le dispositif de traitement (44) est configuré pour recevoir, lors d'un premier échange, une donnée de vérification depuis un calculateur sol (20) à travers un canal de communication sécurisée (23) et vérifier l'établissement d'un tel premier échange via un automate d'état.

11. Infrastructure de communication (10) comprenant :
- un calculateur avionique (22) destiné à être embarqué à bord d'un aéronef (30) et configuré pour recevoir et traiter un flux de données (21),
- un calculateur sol (20) destiné à être installé au sol et configuré pour générer et transmettre le flux de données (21) au calculateur avionique (22), et
**caractérisée en ce que** le calculateur avionique (22) est selon l'une quelconque des revendications 7 à 9.

12. Procédé de traitement mis en œuvre par un dispositif électronique de traitement (44) et comprenant les étapes suivantes :
- réception (100) d'un message chiffré,
- réception (200) d'un message déchiffré associé, le message déchiffré ayant été calculé via un algorithme de déchiffrement appliqué au message chiffré par un dispositif de déchiffrage (42), externe au dispositif de traitement (44), et
- vérification (300) d'un comportement du dispositif de déchiffrage (42) via une comparaison entre le message chiffré et le message déchiffré associé selon un ensemble de critère(s) de comparaison.

13. Procédé de traitement selon la revendication précédente, dans lequel ledit procédé comprend en outre, avant l'étape de réception (100), un échange initial de données non-chiffré et comprenant :
- génération d'une clé client privée et une clé client publique par un calculateur sol (20),
- génération d'une clé serveur privée et une clé serveur publique par le dispositif de déchiffrage (42),
- émission d'un message de reconnaissance, depuis le calculateur sol (20), en direction du dispositif de déchiffrage (42) via un canal de communication sécurisé (23) entre le calculateur sol (20) et le dispositif de déchiffrage (42), ledit message de reconnaissance incluant au moins une donnée de signature client aléatoire, une liste d'algorithmes de chiffrement pris en charge, la clé client publique et une liste de services de cryptographie supportés,
- réception du message de reconnaissance par le dispositif de déchiffrage (42),
- sélection d'un algorithme de chiffrement et d'un service de cryptographie parmi les listes reçues,
- émission d'un second message de reconnaissance, depuis le dispositif de déchiffrage (42), en direction du calculateur sol (20) via le canal de communication (23), ledit second message de reconnaissance incluant au moins l'algorithme de chiffrement sélectionné, la clé serveur publique et le service de cryptographie sélectionné,
- calcul d'une première donnée de vérification par le dispositif de déchiffrage (42) à partir de la clé client publique et de la clé serveur privée,
- calcul d'une seconde donnée de vérification par le calculateur sol (20) à partir de la clé serveur publique et de la clé client privée,
- établissement d'une communication chiffrée entre le calculateur sol (20) et le calculateur avionique (22), ladite communication étant autorisée uniquement si la première donnée de vérification est égale à la seconde donnée de vérification.

14. Programme d'ordinateur comportant des instructions logicielles qui, lorsqu'elles sont exécutées par un ordinateur, mettent en œuvre un procédé de traitement selon la revendication 12 ou 13.
